Europäisches Patentamt

European Patent Office

Office européen des brevets

(19)

(11) Publication number: **0 260 767 B1**

(12) **EUROPEAN PATENT SPECIFICATION**

(45) Date of publication of patent specification: **13.05.92**    (51) Int. Cl.⁵: **B60J 5/04**

(21) Application number: **87201785.0**

(22) Date of filing: **18.09.87**

(54) **A cartridge assembly for a vehicle door and a vehicle door assembly.**

(30) Priority: **19.09.86 US 909820**

(43) Date of publication of application:
**23.03.88 Bulletin 88/12**

(45) Publication of the grant of the patent:
**13.05.92 Bulletin 92/20**

(84) Designated Contracting States:
**BE DE ES FR GB IT NL SE**

(56) References cited:
**EP-A- 0 128 621**
**WO-A-81/03467**
**FR-A- 2 543 890**

(73) Proprietor: **THE DOW CHEMICAL COMPANY**
**2030 Dow Center Abbott Road P.O. Box 1967**
**Midland Michigan 48640-1967(US)**

(72) Inventor: **McLaren, John W.**
**5566 Hunter Road**
**Beaverton Michigan 48612(US)**
Inventor: **Rupprecht, Walter E. F.**
**1201 Airfield Lane**
**Midland Michigan 48640(US)**
Inventor: **Zawisza, Jeffery D.**
**5099 North Waldo Road**
**Midland Michigan 48640(US)**

(74) Representative: **Smulders, Theodorus A.H.J.,**
**Ir. et al**
**Vereenigde Octrooibureaux Nieuwe Parklaan**
**97**
**NL-2587 BN 's-Gravenhage(NL)**

Rank Xerox (UK) Business Services
(3.08/2.19/2.0)

# Description

This invention relates to a cartridge assembly for a vehicle door; to a vehicle door assembly, and to methods of assembling the cartridge and the door assemblies.

In the assembly of a vehicle, the fitting of a door to the vehicle frame is one of the most labor intensive and time consuming operations. This is due to the necessity of performing a number of intricate, manipulative operations in assembling the window glass and window glass operating mechanism, and the door latch and lock mechanism, to the door or door shell after the door has been fitted and mounted to the vehicle door frame. Often times, these mechanisms also include electric motors and wiring for electrical actuation of the mechanisms. Regardless of whether the vehicle door is formed of a metal, a plastic material, or a combination of metal and plastic, the window glass, window glass operating mechanism, door lock and latch operating mechanisms, electric motors, actuators, and associated wiring (hereinafter generally referred to as Operating Mechanisms) frequently are assembled in a space or cavity between a pair of inner and outer panels which form the door shell. Modern vehicles conventionally also include a decorative inner finish or trim panel overlying the inner door panel. In some instances the trim panel is omitted from the door until the door is fitted to the vehicle door frame and the operating mechanisms are installed. Thereafter, the trim panel may be fitted to the inner door panel after which the operating levers, cranks, and switches are connected to their respective operating mechanisms and wires.

In other current door assembly operations a hollow door, i.e. a door shell, may be fitted with a side impact resistant beam to provide protection for the vehicle occupants against transversely applied impacts. The presence of such a beam increases the difficulty of installing the operating mechanisms in the narrow space between the inner and outer door-forming panels. In such manual installations, the installer must utilize relatively small openings provided in the inner panel to effect mounting and wiring of the various operating mechanisms. Thereafter, the inner trim panel is mounted on the inner door panel and the operating cranks, levers, and/or switches are installed in a final assembly operation.

Regardless of the methods currently used to assemble a door on a vehicle and to incorporate in such a door a side impact resistant beam and operating mechanisms, the manual assembly of all of these components into a door or door shell is laborious, time consuming, and may even result in injury to the hands and arms of the assembler due to the movement of their hands and arms through the openings in the inner panel, which exposes the hands and arms to the sharp edges of the panel openings.

The principal object of the present invention, therefor, is to provide a cartridge assembly for a vehicle door; a rapid and effective method of assembling the cartridge assembly; a vehicle door, and to a method of assembling the door on a vehicle frame. All of these objects materially minimize or overcome the difficulties of installing various door operating mechanisms, through openings provided in the door shell.

The present invention particularly resides in a cartridge assembly for a door comprising, a supporting member having a hinge means attached to one end of the supporting member for movably mounting the member to a door frame which defines a doorway, and an operating mechanism attached to the supporting member for mounting a window glass for movement in opposite directions relative to the supporting member.

The invention also resides in a vehicle door comprising a door shell having front and rear panels, said panels being connected along their peripheral edges by a web for positioning the panels at a spaced relationship with respect to each other and for providing a cavity between the panels, and a cartridge assembly comprising a supporting member hingedly mounted on one end thereof for swinging movement on a vehicle door frame, and an opening in a side portion of said web for providing access to said cavity and for telescopically mounting said door shell on the cartridge assembly, and means for securing said door shell to the supporting member.

The present invention further resides in a door for a vehicle having a doorway between a pair of spaced frame members, comprising a cartridge assembly having a length sufficient to span said doorway said cartridge assembly comprising a supporting member, a hinge means attached to one end of the supporting member for movably mounting the member to one of said spaced frame members, a window glass mounted on a support means, and an operating mechanism attached to he supporting member for movement of the support means and the window glass in opposite directions relative to the supporting member, a latch member attached to the supporting member and positioned near the opposite end of the supporting member, and a latching mechanism connected to the latch member for latching the cartridge assembly to the door frame, and inner and outer panels mounted on opposite sides of the cartridge assembly, said panels being connected to each other by at least one flange extending laterally from at least one of said panels to form a door shell having a cavity, and wherein said cartridge assembly extends into said cavity from one side edge to the opposite side edge of the door shell.

The invention also resides in a method of assembling a door to a frame defining a doorway, comprising the steps of hingedly mounting one end of a supporting member to the door frame; said reinforcing member having a length sufficient to span the doorway, introducing the other end of the supporting member through an opening in a lateral edge of a door shell; moving the door shell with respect to the reinforcing member to accommodate the latter within a cavity in the door shell; and securing the door shell to the reinforcing member.

The cartridge assembly basically comprises a supporting member; a hinge means attached to one end of the supporting member for movably mounting the supporting member to a vehicle door frame. The assembly also includes a support means attached to the supporting member for supporting a window glass. The means for supporting the window glass is connected to an operating mechanism for adjustable movement of the support means and window glass in opposite directions, i.e. in the opening and closing directions, relative to the supporting member. The supporting member preferably also has attached to it a door latch and latch operating mechanism for latching the cartridge assembly and, correspondingly the door to the door frame. The cartridge assembly includes, as an optional component, an elongated beam which is constructed of a strength sufficient to constitute an integral side impact resistant beam.

In one embodiment of the invention, the door shell comprises inner and outer panels which are connected to each other along their peripheral portions by a web or flange to form a cavity between the panels, the web is provided with an opening so that the door shell can be slideably mounted onto the free (swinging) end of the cartridge assembly by passing the free end of the cartridge assembly through the opening and then sliding the door shell onto the cartridge assembly.

One or both of the panels is preferably provided with a guide means, such as channel strips, for guiding the door shell onto the cartridge assembly. In effect, the channels in the door shell slidably engage the cartridge assembly to thereby guide the door shell into a mounted position on the cartridge assembly. It is also contemplated, within the scope of the present invention, to mount the door shell in sections onto the cartridge assembly after the cartridge assembly is hingedly mounted on the door frame. In this method of assembly, an inner panel is provided with a peripheral flange. The inner panel is then mounted on the cartridge assembly to allow the assembler to conduct any assembly operations through the open front of the door. Once all of the assembly operations have been completed and the necessary wiring connections, and the like, have been made, the door is completed by mounting the outer panel onto the door by welding or bonding the peripheral edge of the outer panel to the flange portion of the inner panel. It will be understood, of course, that the outer panel may be provided with a peripheral flange portion to which the inner panel can be connected as by welding or bonding, or the like. It is also contemplated that both panels can be provided with a flange portion which can slide into each other in a telescoping relationship. These flange portions can subsequently be welded or bonded to each other in a manner known in the art.

The support member of the cartridge assembly is conveniently secured to the door shell, as by conventional nuts, bolts, welding, or adhesive bonding. One or more hinges are mounted at one end of the support member, for mounting the door for swinging or pivoting movement to a door frame.

The door of the invention can be used for various applications such as, for example, building doors, aircraft doors, marine doors, appliance doors, office equipment doors, but especially vehicle doors, including tailgate and hatchback doors, as well as trunk, and engine compartment closures. The supporting member preferably has mounted on it the operating mechanisms and, optionally, the side impact resistant beam which is often required by governmental regulation to protect passengers in the event of a vehicle accident involving, for example, an impact to the vehicle door.

The door as constructed in accordance with the invention is disclosed in the following description and in the accompanying drawings, wherein:

Figure 1 is a fragmentary, diagrammatic, isometric view of the essential components of the door of the invention;

Figures 2 and 3 are views similar to Figure 1, but illustrate the component parts in more detail;

Figure 4 is a view similar to Figure 2, but illustrates the opposite sides of the components; and

Figure 5 is a fragmentary, isometric, largely diagrammatic view illustrating the application of the door to the tailgate of a station wagon.

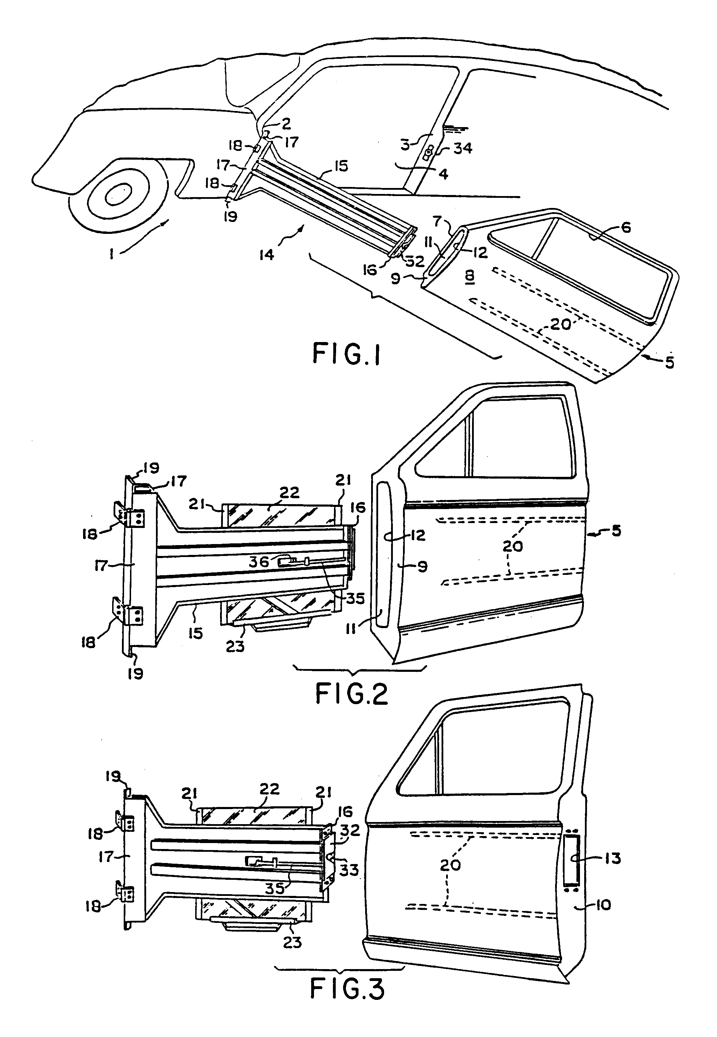

With particular reference to Figures 1 to 4, the door of the invention is adapted for use with an automotive vehicle 1 having a chassis provided with spaced apart forward and rearward frame members 2 and 3, respectively, forming a doorway 4 to facilitate ingress and egress to and from the interior of the vehicle. The vehicle conventionally is equipped with a door or door shell 5 having an opening 6 therein that normally may be closed by a window glass (not shown in Figure 1). The door shell may be formed of metal, or plastic, or a combination thereof and includes an inner panel 7 and an outer panel 8. The panels are spaced from one another by a web or flange. A forward portion 9 of the web is illustrated in Figure 2, and a rearward portion is shown in Fig. 3. It will be understood that the web may be one or more strips of metal or plastic material that can be welded or bonded to the inner and outer panels to form the door shell. Alternatively, it is also possible to form one of the inner or outer panels, or both of the panels, with a flange portion which can be welded or otherwise bonded to the other of the panels or to each other to form the door shell having a cavity or chamber 11 that extends between the panels and over the full length of the door shell. The web 9, at the forward portion of the door shell, is provided with an opening 12 and the web 10, at the rearward portion of the door shell, is provided with an opening 13. Both of the openings 12 and 13 are in communication with the cavity 11.

It is conventional practice at the present time to provide vehicle doors with reinforcing members or beams that are positioned between the inner and outer door panels and that extend longitudinally of the door to provide additional protection for the vehicle occupants against transversely and/or longitudinally directed impacts. Conventionally, the reinforcing beam is applied by welding, or other securing means to one of the door panels prior to securing the two panels to one another. In accordance with the invention, however, a cartridge assembly 14 is provided which comprises a supporting member 15, preferably having a box-like configuration. The supporting member is formed of steel, a fiber reinforced synthetic resinous material, or the like, and has an end plate 16 at one end and an enlarged portion 17 at its opposite end. In the preferred embodiment of the invention the enlarged portion 17 is provided with at least one vertical hinge member 18 which may extend over the entire length or width of the enlarged portion. Preferably, however, a pair of spaced hinges are secured in a suitable manner to the forward frame member 2 of the vehicle, thereby enabling the support member 15 to be swung about a generally vertical (or horizontal) axis.

To assemble the cartridge assembly 14 in the door shell 5, the smaller end of the support member 15 is introduced into the door cavity 11 by aligning the support member with the opening 12 in the forward portion of the web and telescoping the door shell over the support member until the web portion 9 engages a pair of flanges 19 at opposite ends of the enlarged portion 17. To facilitate such relative movement of the door shell with respect to the support member, the door shell is equipped with guide members 20 on either or both of the inner and outer panels for supporting and/or guiding the shell onto the support member. The guides 20 are recessed inwardly of the forward end of the cavity 11 to avoid interference with the enlarged portion 17 of the support member.

The length of the support member 15 preferably corresponds to the length of the door, thereby enabling the end plate 16 of the support member to abut the rearward web portion 10. In this position of the parts, the flanges 19 and the end plate 16 may be bolted, welded, or otherwise suitably fixed to the respective web portions 9 and 10 so as to secure the door shell 5 and cartridge assembly 14 to one another in assembled relation. When the door shell and cartridge assembly 14 are assembled, the outer panel 8 of the door shell overlies and obscures the flanges 19.

If the window opening 6 is one in which a vertically movable windowpane or glass is to be accommodated, the cartridge assembly 14 includes a pair of spaced apart guide rails 21 secured to the support member and between which a window glass 2 is slideably accommodated. An operating mechanism 23 for raising and lowering the window glass comprises a crank arm 24 pivoted at 25 to the support member 15 and terminating at one end in a pin 26 that is accommodated in a slot 27 formed in a channel-shaped glass support 28 in which the lower end of the windows glass 22 is secured in a conventional manner.

The opposite end of the crank arm 24 carries a toothed gear segment 29 which meshes with a pinion gear 30 that is fixed on a pin 31 journaled in the support member 15. Rotation of the pinion gear 30 in one direction raises the glass 22 and rotation of the pinion gear in the opposite direction lowers the glass, as is conventional.

Although the mechanism for raising and lowering the window glass is disclosed as being manually operable, it will be understood that a conventional electrical or other operating mechanism can be used, if desired.

It is preferred that the end plate 16 at the rearward end of the support member 15 be fitted with a carrier 32 (Figures 1 and 3) on which is mounted a portion of a conventional door latch 33 which cooperates with a complimentary portion 34 (Figure 1) mounted on the rearward frame member 3 of the vehicle. The latch itself forms no part of the invention and may constitute any suitable, conventional latch. A latch operating mechanism comprising an operating link 35 is mounted on the support member 15 to enable release of the latch to be effected when desired. The link 35 includes a tongue 36 that projects toward the inner door panel 7 that is provided with an appropriate opening for the accommodation of a door handle 37 that is connected to the tongue 36. A window crank 36a is connected to the pin 31 so as to enable the window operating mechanism to be operated from within the vehicle.

Although not shown, the door is fitted with an external latch release of conventional construction to enable the door to be opened from the outside of the vehicle.

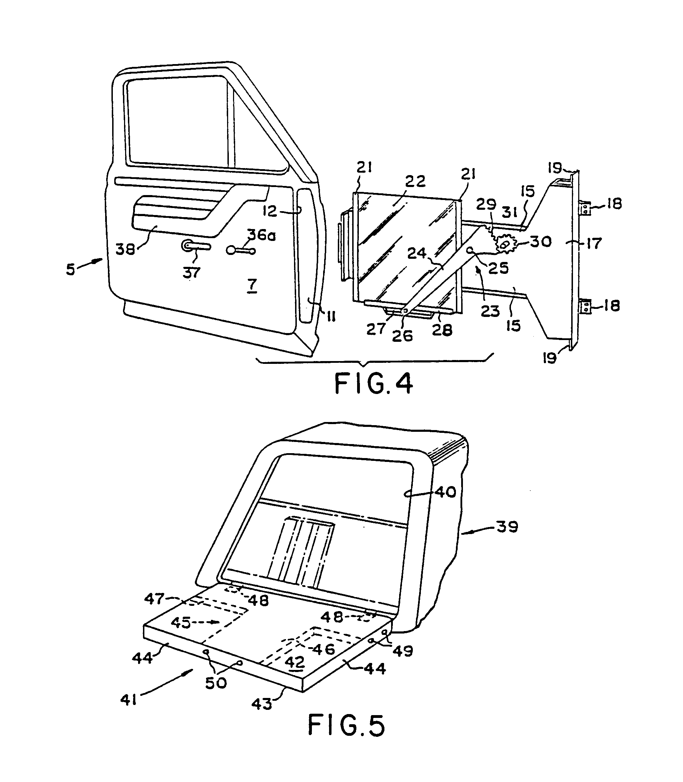

As is shown in Figure 4, the inner panel 7 is fitted with appropriate decorative material, including an arm rest 38, as an integral part of the panel. It will be understood, however, that if the inner panel is constructed of a metal or plastic member, a separate trim panel may be removably or permanently secured to the inner panel.

Figure 5 illustrates the rear end of a station wagon 39, or the like, having an opening 40 that normally is closed by a tailgate 41. The tailgate has inner and outer panels, 42, 43 that are spaced apart by a web or flange 44 so as to provide a cavity for the accommodation of a T-shaped cartridge assembly 45. The assembly 45 comprises a supporting member 46 provided with an enlargement 47 at one end. The assembly 45 may be slid into the tailgate between the panels 42 and 43 via an opening (not shown) formed in the web between the panels at the lower end of the tailgate.

The enlargement 47 includes hinges 48 by means of which the cartridge assembly is hinged to the body of the station wagon for swinging movements about a substantially horizontal axis. Suitable bolts 49, or the like, secure opposite ends of the enlargement 47 to the adjacent web portion 44 of the tailgate. The free end of the supporting member 46 abuts the endmost web portion 44 of the tailgate and is fixed to the latter by suitable bolts 50, or the like.

Although not shown, it will be understood that a window glass supporting and operating mechanism, as well as tailgate latch operating mechanism, may be incorporated into the cartridge assembly 45 and fixed to the supporting member 46 in a manner like that disclosed in the earlier described embodiment. It will also be understood that the embodiment shown in Figure 5 is equally applicable to those vehicles which have a door or tailgate hinged at an upper end thereof.

Several significant advantages accrue from the construction disclosed herein. For example, the ability to secure the window glass, its operating mechanism, and the door latch operating mechanism to the supporting member prior to assembly of the cartridge assembly with the door shell facilitates greatly the mounting of a door onto a frame, particularly the frame of a vehicle.

Further, the ability of the supporting member to be hinged to the vehicle frame prior to its assembly with the door shell greatly facilitates mounting of the door to the vehicle frame. In this regard, it will be understood that the door shell can be mounted onto the supporting member as separate components. More specifically, once the cartridge assembly, i.e. the supporting member and operating mechanisms, is mounted on the door frame, the inner panel is mounted on the supporting member followed by the outer panel. In this assembly procedure, the necessary mechanical adjustments and wiring connections can be more easily made through the outer portion of the door prior to mounting the outer panel on the door.

In addition, the vehicle door can also be assembled by first hingedly mounting the cartridge assembly to the frame and then mounting the door shell, consisting of the inner and outer panels which are spaced from each other by the web or flange, by relative telescoping movement of the door shell onto the beam thereof. This assembly procedure also enables an extremely fast and easy assembly to be achieved.

An additional advantage of providing hinges on the supporting member rather than on the door shell itself is that a substantially closer fit can be obtained between the leading edge of the door and the adjacent edge of the vehicle body at the forward frame member 22. In present constructions, the hinges are carried by the door and are mounted on the web thereof and are so positioned as to be wholly concealed when the door is in its closed position. As a consequence, the leading edge of the outer door panel must pass inwardly of the trailing or confronting edge of the adjacent fender or body member of the vehicle when the door is swung open. To ensure such movement without binding engagement between these leading and trailing edges, they usually are spaced apart by an undesirably large gap or margin. In the present invention, however, the leading edge of the outer door panel need not move inwardly of the trailing edge of the confronting body member upon opening of the door. Thus, the relatively large margin heretofore required by conventional constructions is not required in the construction herein disclosed.

In the preferred embodiment, the length of the supporting member corresponds substantially to the length of the doorway. The advantage of this relationship is that, when the door is in a closed position, any impact to which the vehicle may be subjected is less likely to cause collapse of the vehicle by crushing of the door and consequent failure of the vehicle frame on opposite sides of the doorway.

The disclosed embodiments are representative of presently preferred forms of the invention, but are intended to be illustrative rather than definitive thereof. The invention is defined in the claims.

## Claims

1. A cartridge assembly (14, 45) for a door (5, 41), the cartridge assembly comprising a supporting member (15, 46) having a hinge means (18, 48) attached to one end thereof for movably mounting the member (15, 46) to a door frame (2, 3) which defines a door way (4, 40), and further comprising means (16, 19) for mounting a door shell (5, 41) to the cartridge assembly.

2. The cartridge assembly of claim 1, characterized in that operating mechanisms (21-37) for door elements, such as a window glass (22), a latch (33) and the like, are attached to the supporting member (15, 46).

3. The cartridge assembly according to claim 1 or 2, characterized in that said supporting member (15, 46) has an enlarged portion (17, 47) at one end thereof and wherein said hinge means (18, 48) comprises a pair of spaced apart hinge members (18, 48) mounted on said enlarged portion (17, 47) for swinging movement of said supporting member on an axis thereof.

4. The cartridge assembly according to claim 1, 2 or 3, wherein the supporting member (15, 46) is of a sufficient length to span the doorway (4, 40) and the end of the support member (15, 46) opposite to the hinge means carrying end (17), is provided with latch means (32, 33).

5. The cartridge assembly of claims 1, 2, 3 or 4, wherein said door is a vehicle door (5, 41) and wherein the supporting member (15, 46) includes a side impact resistant beam attached to said member (15, 46).

6. A door assembly for use with the cartridge assembly according to any of the preceding claims, comprising a door shell (5, 41) having front (7, 42) and rear (8, 43) panels, said panels being connectable along their peripheral edges by a web means (9, 10; 44) for positioning the panels at a spaced relationship providing a cavity (11) between the panels, said door shell (5, 41) being designed to enclose the cartridge assembly (14, 45) extending in said cavity (11).

7. The door assembly of claim 6, characterized in that an opening (12) is provided in said web (9, 44) for providing access to said cavity (11) inside the door shell (5, 41) and for telescopically mounting said door shell on the supporting member (15, 46).

8. The door assembly of claim 7, characterized in that said access opening (12) for the cartridge (14, 45) to the door cavity (11) is dimensioned for allowing the door shell to telescope over the cartridge (14, 45) carrying operating mechanisms (21-37) according to claim 2, such as a window glass (22) and guiding means (21), as well as supporting means (23) for movement of the window glass (22) in opposite directions relative to the supporting member (14).

9. The door according to claim 6, 7 or 8, including means (20) on said door shell (5) for guiding the door shell onto the cartridge assembly as the door shell is telescopically mounted onto the cartridge assembly.

10. The door assembly of claim 6, comprising separate inner (7, 42) and outer (8, 43) panels, at least one of them being connectable to the cartridge assembly (14, 45), the other being connectable to the panel already secured to the cartridge assembly along the peripheral web (9, 10; 44) to enclose the cartridge assembly in the so formed door shell (5, 41).

11. A method of assembling a door (5, 41) to a frame defining a doorway (4, 40), comprising the steps of hingedly mounting one end of a supporting member (15, 46) to the door frame, said supporting member having a length sufficient to span the doorway, introducing the other end of the supporting member (15, 46) through an opening (12) in a lateral edge (9) of a door shell (5), moving the door shell (5) with respect to the supporting member (15, 40) to accommodate the latter (15, 40) within a cavity (11) in the door shell (5), and securing the door shell (5) to the supporting member (4, 40).

12. The method of claim 11, including the step of assembling the adjustable window glass support (23) and a window glass (22) supported by the support (23) to the supporting member (15) prior to the step of introducing the support member (15) through the opening (12) in the door shell (5).

13. The method of claim 11 or 12, including the step of assembling a side impact resistant beam to the supporting member prior to the step of introducing the supporting member (15) through the opening (12) in the door shell (5).

**14.** A method of assembling a door (5, 41) to a frame defining a doorway (4, 40), comprising the steps of hingedly mounting one end of a cartridge assembly (14, 15) according to one of the claims 1-5 to the door frame (2), securing one of the panels of the door assembly according to claim 10 to the cartridge assembly (14, 15) and connecting the other panel to the so formed subassembly.

**15.** A vehicle door comprising a cartridge assembly according to any of the claims 1-6 and assembled by using the method of one of the claims 11-14.

**Revendications**

**1.** Ensemble de cartouche (14, 45) pour une porte (5, 41), l'ensemble de cartouche comprenant un élément porteur (15, 46) ayant un moyen de charnière (18, 48) fixé à l'une de ses extrémités pour monter l'élément (15, 46) de manière mobile sur un dormant de porte (2, 3) qui définit une embrasure de porte (4, 40), et comprenant également des moyens (16, 19) pour monter une coque de porte (5, 41) sur l'ensemble de cartouche.

**2.** Ensemble de cartouche de la revendication 1, caractérisé en ce que des mécanismes de manoeuvre (21-37) d'éléments de porte, tels qu'une vitre de fenêtre (22), un verrou (33) et des éléments similaires, sont fixés à l'élément porteur (15, 46).

**3.** Ensemble de cartouche selon la revendication 1 ou 2, caractérisé en ce que ledit élément porteur (15, 46) possède une partie élargie (17, 47) à l'une de ses extrémités, et en ce que ledit moyen de charnière (18, 48) comprend une paire d'éléments de charnière espacés (18, 48) montés sur ladite partie élargie (17, 47) pour faire pivoter ledit élément porteur sur son axe.

**4.** Ensemble de cartouche selon la revendication 1, 2 ou 3, dans lequel l'élément porteur (15, 46) est d'une longueur suffisante pour s'étendre d'un côté à l'autre de l'embrasure de porte (4, 40), et l'extrémité de l'élément porteur (15, 46) opposée à l'extrémité (17) supportant le moyen de charnière est munie de moyens de verrouillage (32, 33).

**5.** Ensemble de cartouche des revendications 1, 2, 3 ou 4, dans lequel ladite porte est une porte de véhicule (5, 41), et dans lequel l'élément porteur (15, 46) comprend une barre résistante aux impacts latéraux fixée audit élément (15, 46).

**6.** Ensemble de porte destiné à être utilisé avec l'ensemble de cartouche selon l'une quelconque des revendications précédentes, comprenant une coque de porte (5, 41) ayant des panneaux avant (7, 42) et arrière (8, 43), lesdits panneaux pouvant être reliés le long de leurs bords périphériques par un moyen de membrure (9, 10 ; 44) pour positionner les panneaux de manière espacée l'un par rapport à l'autre afin de créer une cavité (11) entre les panneaux, ladite coque de porte (5, 41) étant conçue pour entourer l'ensemble de cartouche (14, 45) s'étendant dans ladite cavité (11).

**7.** Ensemble de porte de la revendication 6, caractérisé en ce qu'une ouverture (12) est pratiquée dans ladite membrure (9, 44) pour livrer accès à ladite cavité (11) située à l'intérieur de la coque de porte (5, 41) et pour monter ladite coque de porte de manière télescopique sur l'élément porteur (15, 46).

**8.** Ensemble de porte de la revendication 7, caractérisé en ce que ladite ouverture d'accès (12) de la cartouche (14, 45) à la cavité de porte (11) est dimensionnée pour permettre à la coque de porte de s'emmancher de manière télescopique sur la cartouche (14, 45) supportant des mécanismes de manoeuvre (21-37) selon la revendication 2, tels qu'une vitre de fenêtre (22), et des moyens de guidage (21), ainsi qu'un moyen de support (23) pour déplacer la vitre de fenêtre (22) dans des directions opposées par rapport à l'élément porteur (14).

**9.** Porte selon la revendication 6, 7 ou 8, comprenant des moyens (20) sur ladite coque de porte (5) pour guider la coque de porte sur l'ensemble de cartouche lorsque la coque de porte est montée de manière télescopique sur l'ensemble de cartouche.

**10.** Ensemble de porte de la revendication 6, comprenant des panneaux intérieur (7, 42) et extérieur (8, 43) séparés, dont l'un au moins peut être relié à l'ensemble de cartouche (14, 45), l'autre pouvant être relié au panneau déjà fixé à l'ensemble de cartouche le long de la membrure périphérique (9, 10 ; 44) pour entourer l'ensemble de cartouche dans la coque de porte ainsi formée (5, 41).

**11.** Procédé de montage d'une porte (5, 41) sur un dormant définissant une embrasure de porte (4, 40), comprenant l'étape où l'une des extrémités d'un élément porteur (15, 46) est montée de manière articulée sur le dormant de porte, ledit élément porteur ayant une longueur suffisante pour s'étendre d'un côté à l'autre de l'embrasure de porte, l'étape où l'autre extrémité de l'élément porteur (15, 46) est introduite à travers une ouverture (12) ménagée dans un bord latéral (9) d'une coque de porte (5), l'étape où la coque de porte (5) est déplacée par rapport à l'élément porteur (15, 40) pour loger ce dernier (15, 40) dans une cavité (11) de la coque de porte (5), et l'étape où la coque de porte (5) est fixée à l'élément porteur (4, 40).

**12.** Le procédé de la revendication 11, comprenant l'étape où un support de vitre de fenêtre réglable (23) et une vitre de fenêtre (22) supportée par le support (23) sont fixés à l'élément porteur (15) avant l'étape où l'élément porteur (15) est introduit dans l'ouverture (12) de la coque de porte (5).

**13.** Le procédé de la revendication 11 ou 12, comprenant l'étape où une barre résistante aux impacts latéraux est montée sur l'élément porteur avant l'étape où l'élément porteur (15) est introduit à travers l'ouverture (12) de la coque de porte (5).

**14.** Procédé de montage d'une porte (5, 41) sur un dormant définissant une embrasure de porte (4, 40), comprenant les étapes où l'une des extrémités d'un ensemble de cartouche (14, 15) selon l'une des revendications 1 à 5 est montée de manière articulée sur le dormant de porte (2), où l'un des panneaux de l'ensemble de porte selon la revendication 10 est fixé à l'ensemble de cartouche (14, 15) et où l'autre panneau est relié au sous-ensemble ainsi formé.

**15.** Porte de véhicule comprenant un ensemble de cartouche selon l'une quelconque des revendications 1 à 6 et montée en utilisant le procédé de l'une des revendications 11 à 14.

**Patentansprüche**

**1.** Kartuschenaufbau (14, 45) für eine Tür (5, 41), wobei der Kartuschenaufbau enthält: ein Tragteil (15, 46) mit einer an einem Ende desselben befestigten Scharniereinrichtung (18, 48) zum beweglichen Befestigen des Teils (15, 46) an einem Türrahmen (2, 3), der eine Türöffnung (4, 40) ausbildet, und weiterhin mit Einrichtungen (16, 19) zum Montieren eines Türkörpers (5, 41) an dem Kartuschenaufbau.

**2.** Kartuschenaufbau nach Anspruch 1,
**dadurch gekennzeichnet,**
daß Betätigungsmechanismen (21-37) für Türelemente, wie ein Glasfenster (22), eine Verriegelung (33) und dergleichen, am Tragteil (15, 46) befestigt sind.

**3.** Kartuschenaufbau nach Anspruch 1 oder 2,
**dadurch gekennzeichnet,**
daß das Tragteil (15, 46) an einem Ende ein vergrößertes Teil (17, 47) aufweist und die Scharniereinrichtung (18, 48) ein Paar im Abstand voneinander, am vergrößerten Teil (17, 47) befestigte Scharnierbänder (18, 48) für Schwenkbewegung des Tragteils um eine Achse derselben aufweist.

**4.** Kartuschenaufbau nach Anspruch 1, 2 oder 3,
**dadurch gekennzeichnet,**
daß das Tragteil (15, 46) ausreichend lang ist, um die Türöffnung (4, 40) zu überbrücken, und das Ende des Tragteils (15, 46), das dem die Scharnierbänder tragenden Ende (17) gegenüberliegt, mit Verriegelungseinrichtungen (32, 33) versehen ist.

**5.** Kartuschenaufbau nach Ansprüchen 1, 2, 3 oder 4,
**dadurch gekennzeichnet,**
daß die Tür eine Fahrzeugtür (5, 41) ist und das Tragteil (15, 46) einen am Teil (15, 46) befestigten, gegen seitliche Schlagbeanspruchung beständigen Träger aufweist.

**6.** Türkonstruktion zur Verwendung mit dem Kartuschenaufbau nach jedem der vorstehenden Ansprüche, mit einem Türkörper (5, 41) mit vorderer (7, 42) und rückwärtiger Türverkleidung (8, 43), wobei die Verkleidungen entlang ihrer Außenränder durch Stege (9, 10, 44) verbindbar sind, zum Anordnen der Verkleidungen in Abstand voneinander, so daß ein Hohlraum (11) zwischen den Verkleidungen ausgebildet wird, wobei der Türkörper (5, 41) ausgebildet ist, den sich in den Hohlraum (11) erstreckenden Kartuschenaufbau (14, 45) zu umgeben.

**7.** Türkonstruktion nach Anspruch 6,
**dadurch gekennzeichnet,**
daß eine Öffnung (12) in dem Steg (9, 44) vorhanden ist zum Ausbilden eines Zuganges zum Hohlraum (11) in dem Türkörper (5, 41) und zum aufeinanderschiebenden Montieren des Türkörpers am Tragteil (15, 46).

8. Türkonstruktion nach Anspruch 7,
**dadurch gekennzeichnet,**
daß die Zugangsöffnung (12) für den Kartuschenaufbau (14, 45) zum Hohlraum (11) der Tür so dimensioniert ist, daß der Türkörper über den Betätigungsmechanismen (21-37) nach Anspruch 2, wie einem Glasfenster (22) und Führungseinrichtungen (21) und Trageinrichtungen (23) zum Bewegen des Glasfensters (22) in entgegengesetzte Richtungen, relativ zu dem Tragteil (14) tragenden Kartuschenaufbau (14, 45) geschoben werden kann.

9. Türkonstruktion nach Anspruch 6,7 oder 8,
**dadurch gekennzeichnet,**
daß Einrichtungen (20) am Türkörper (5) vorhanden sind zum Führen des Türkörpers auf den Kartuschenaufbau, wenn der Türkörper durch Aufschieben auf dem Kartuschenaufbau montiert wird.

10. Türkonstruktion nach Anspruch 6,
**dadurch gekennzeichnet,**
daß voneinander getrennte Innenverkleidung (7, 42) und Außenverkleidung (8, 43) vorhanden sind, wobei mindestens eine derselben mit dem Kartuschenaufbau (14, 45) verbindbar ist und die andere mit der bereits am Kartuschenaufbau befestigten Verkleidung entlang des Umfangsteges (9, 10, 44) verbindbar ist, um den Kartuschenaufbau mit dem dadurch ausgebildeten Türkörper (5, 41) zu umgeben.

11. Verfahren zum Zusammenbauen einer für (5, 41) mit einem eine Türöffnung (4, 40) bildenden Rahmen durch die Schritte: Montieren eines Endes eines Tragteils (15, 46) mit einem Scharnier an dem Türrahmen, wobei das Tragteil ausreichend lang ist, um die Türöffnung zu überbrücken, Einbringen des anderen Endes des Tragteils (15, 46) durch eine Öffnung (12) in eine Seitenkante (9) eines Türkörpers (5), Bewegen des Türkörpers (5) in bezug zum Tragteil (15, 40), um Letzteres (15, 40) in einem Hohlraum (11) im Türkörper (5) aufzunehmen, und Befestigen des Türkörpers (5) am Tragteil (15, 46).

12. Verfahren nach Anspruch 11,
**gekennzeichnet dadurch**
den Schritt des Montierens eines einstellbaren Glasfensterträgers (23) und eines vom Träger (23) gehaltenen Glasfensters (22) an den Tragteil (15), vor dem Schritt des Einbringens des Tragteils (15) durch die Öffnung (12) in den Türkörper (5).

13. Verfahren nach Anspruch 11 oder 12,
**gekennzeichnet dadurch**
den Schritt des Montierens eines gegen seitliche Schlagbeanspruchung beständigen Trägers an dem Tragteil vor dem Schritt des Einbringens des Tragteils (15) durch die Öffnung (12) in den Türkörper (5).

14. Verfahren zum Zusammenbauen einer Tür (5, 41) mit einem eine Türöffnung (4, 40) bildenden Rahmen durch die Schritte: Montieren eines Endes eines Kartuschenaufbaus (14, 15) nach einem der Ansprüche 1-5 mit einem Scharnier an dem Türrahmen (2), Befestigen einer der Verkleidungen der Türkonstruktion nach Anspruch 10 am Kartuschenaufbau (14, 15) und Verbinden der anderen Verkleidung mit der so ausgebildeten Teil konstruktion.

15. Fahrzeugtür mit einem Kartuschenaufbau nach jedem der Ansprüche 1-6 und zusammengebaut unter Verwendung des Verfahrens nach einem der Ansprüche 11-14.

FIG.1

FIG.2

FIG.3

FIG.4

FIG.5